# EUROPEAN PATENT SPECIFICATION

(11) **EP 0 846 933 B1**
(45) Date of publication and mention of the grant of the patent: **07.04.2004**
(21) Application number: 97309824.7
(22) Date of filing: 05.12.1997
(51) Int. Cl.: G01C 21/20

(54) **Vehicle navigation system**
Fahrzeugnavigationssystem
Système de navigation véhiculaire

(30) Priority: 09.12.1996 US 761868
(43) Date of publication of application: 10.06.1998
(73) Proprietor: Visteon Technologies, LLC, Dearborn, MI 48126 (US)
(72) Inventor: Zuber, Gary, Santa Clara, California 95051-1928 (US)
(74) Representative: W.P. THOMPSON & CO.

(56) References cited:
- EP-A- 0 703 436
- US-A- 5 410 486

## Description

The present invention relates to methods and apparatus for ensuring that a route generated by a vehicle navigation system may be navigated more safely than hitherto by a user. Arrangements to be described below, by way of example in illustration of the present invention, provide a vehicle navigation system which generates routes which are less likely to include consecutive manoeuvres which are difficult and/or hazardous to execute.

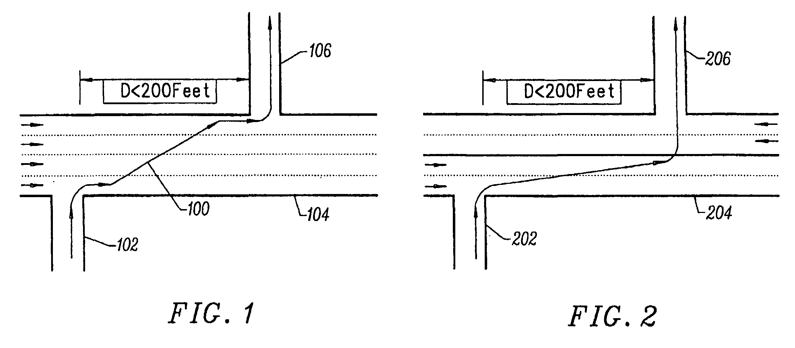

Currently available vehicle navigation systems typically generate routes using variations of well known search algorithms in conjunction with commercially available map databases. Some algorithms attempt to generate optimum routes, i.e., shortest distance or shortest travel time, using a variety of techniques. Unfortunately, while these algorithms typically generate routes which obey travel restrictions, e.g., one-way streets, and avoid prohibited manoeuvres, they do not typically determine whether a manoeuvre is difficult to execute before including it in the generated route. Figs. 1-5 of the accompanying drawings show, by means of plan views of roads, several examples of troublesome consecutive manoeuvres.

In Fig. 1, route 100 includes a right turn from road 102 to road 104, followed by a left turn on to road 106. The first manoeuvre, the right turn, places the vehicle in the far right lane of road 104 which is a four-lane, one-way road. The left turn on to road 106 is less than 200 feet (60 m) down the road from the intersection of roads 102 and 104, and must be executed from the far left lane of road 104. While these consecutive manoeuvres are theoretically possible, the second manoeuvre, i.e., the left turn, is extremely difficult and potentially hazardous because so many lanes of traffic must be crossed in such a short distance. The situation becomes even more hazardous where, as is often the case, the user is relying heavily on the generated route because of a lack of familiarity with the area.

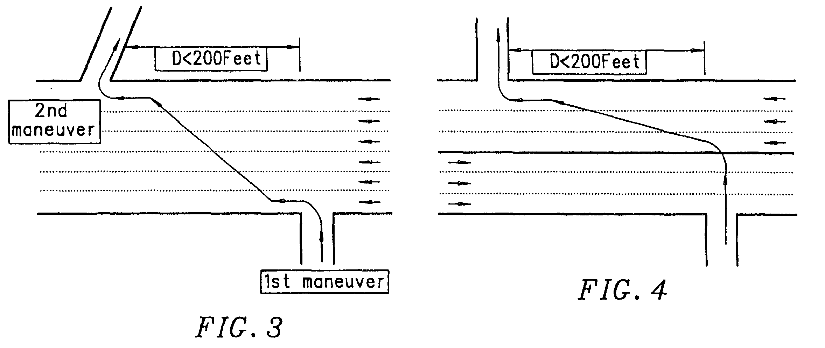

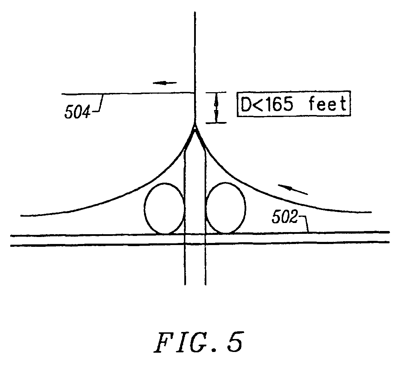

Fig. 2 shows a similar situation except that road 204 is a two-way road. In this situation, the danger arises as a result of entering the stream of traffic on road 204 from road 202, and stopping abruptly within a short distance for the purpose of making the required left turn on to road 206. Figs. 3 and 4 show situations similar to Figs. 1 and 2 except that the first manoeuvre is a left turn and the second is a right turn. Fig. 5 shows a situation in which the first manoeuvre involves exiting the westbound section of a freeway 502 and a second manoeuvre which is a left turn on to road 504 across oncoming traffic which is entering freeway 502. The difficulty and danger associated with such a scenario is self evident.

Features of a method and apparatus to be described below by way of example in illustration of the invention are that they enable it to be determined whether two manoeuvres are too closely spaced for the second manoeuvre to be included in the generated route. A vehicle navigation system to be described below by way of example in illustration of the present invention searches a map database for road segments to be included in the generated route. The system also generates a series of manoeuvre instructions to be communicated to the driver which correspond to the manoeuvres in the generated route. After including a particular manoeuvre in the route, the search algorithm identifies a second manoeuvre which could potentially be included in the route. Depending on a number of factors, the system then determines whether the second manoeuvre is within some threshold distance of the first manoeuvre. The factors which determine this threshold distance may include, but are not limited to, whether the first and second manoeuvres are in opposite directions (e.g., the first is right and the second is left), and the number of lanes, the width, and/or the speed limit of the road segment connecting the two manoeuvres.

If, given these factors, the second manoeuvre is determined to be within the threshold distance, the cost associated with the second manoeuvre is increased so that the search algorithm is less likely to include that manoeuvre in the route. In this way, the incidence of potentially dangerous consecutive manoeuvres in a generated route is reduced. It should be noted, however, that, in the embodiment to be described, the second manoeuvre is not entirely eliminated from consideration for inclusion in the route. This allows for the case in which the second manoeuvre may be necessary for the completion of a route.

It should also be noted that a number of variations of the above-described embodiment may be made within the scope of the protection sought by the appended claims. For example, in another embodiment, the cost associated with the second manoeuvre is increased by a variable amount, the value of which is dependent on the distance between the first and second manoeuvres. In yet another embodiment, the threshold distance is a fixed value for each of a number of categories in which the road segment connecting the two manoeuvres might be included. That is, for example, if the road segment connecting the two manoeuvres is part of a major surface street, the threshold distance could be 200 feet (60 m). If, however, the road segment is part of an expressway or freeway, the threshold distance could be 1000 feet (300 m). In still another embodiment, rather than increasing the cost of the manoeuvre, the system ignores the manoeuvre for route generation purposes. Alternatively, the system prohibits access to the manoeuvre and/or its associated road segments.

The embodiments to be described below illustrate a method and apparatus which are suitable for use in generating a route from a source location to a destination in a vehicle navigation system. Initially, the system to be described generates a first partial route from the source location to the end of the first partial route. The system then determines whether a second manoeuvre is within a first distance from a first manoeuvre at the end of the first partial route. Where the second manoeuvre is within the first distance, the system manipulates a parameter associated with the second manoeuvre (e.g., the cost). The system then generates a second partial route from the end of the first partial route to the destination, generation of the second partial route being based on at least in part on the parameter associated with the second manoeuvre.

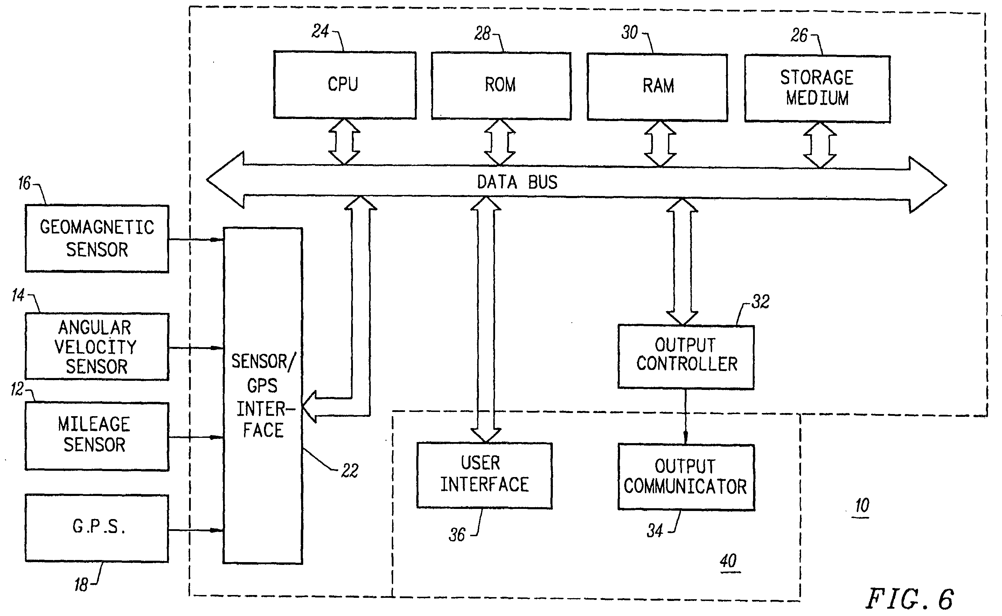

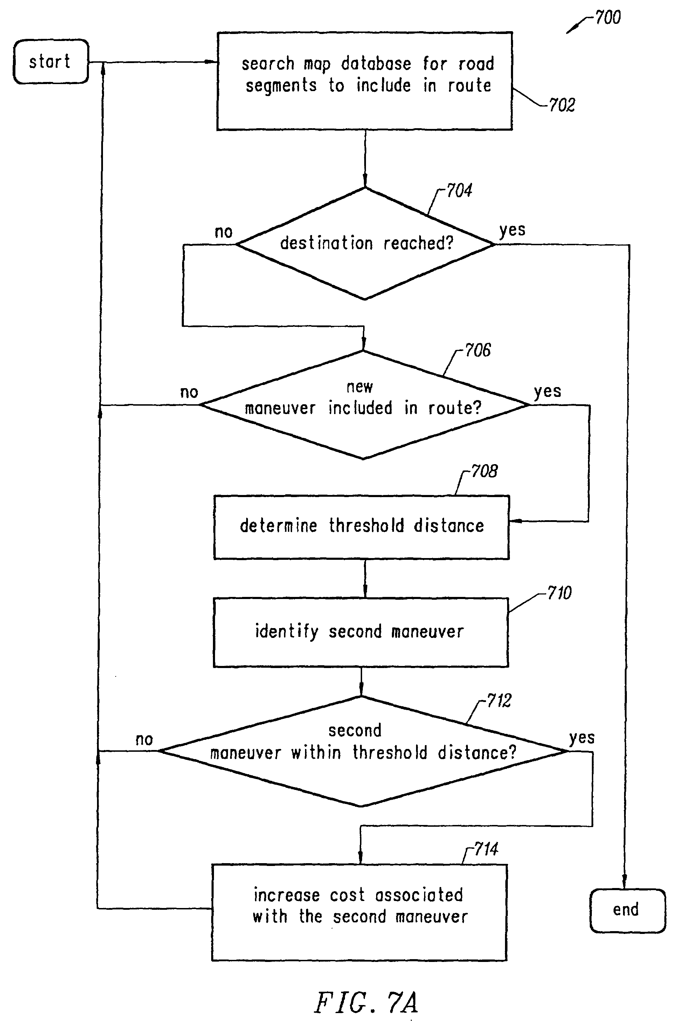

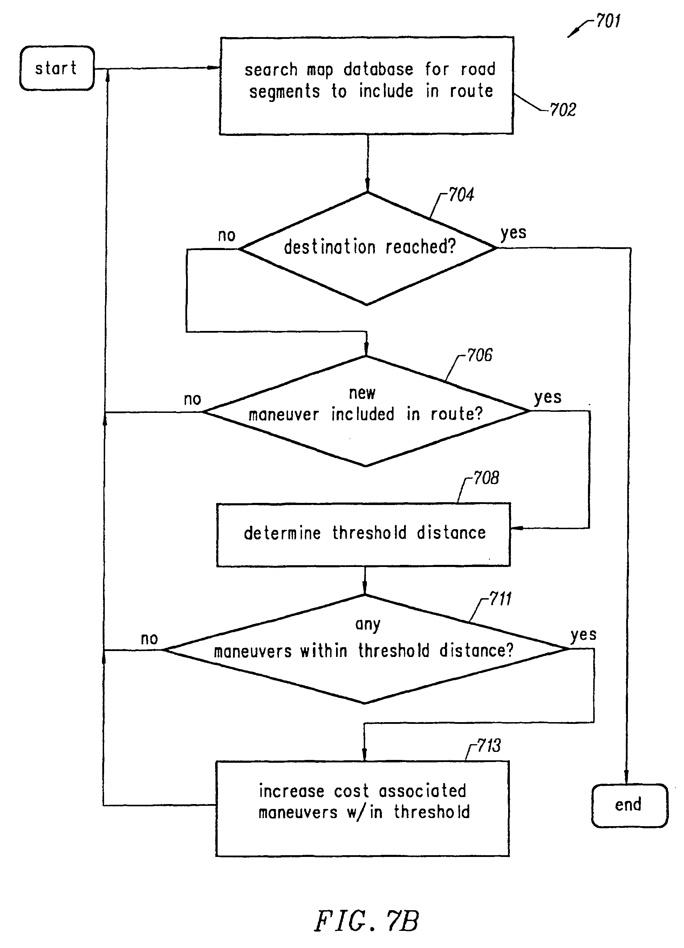

The following description and Figs. 6, 7A and 7B of the accompanying drawings disclose, by means of examples, the invention which is characterised in the appended claims, whose terms determine the extent of the protection conferred hereby.

In the drawings:-
Fig. 6 is a block schematic diagram of a vehicle navigation system, and
Figs. 7A and 7B are flowcharts for use in describing the operation of two specific embodiments illustrative of the present invention.

It may be helpful, although it is not necessary for understanding the invention, to refer to the applicants' United States Patents No. 5,345,382, No. 5,359,529, No. 5,374,933, and No. 5,515,283, to the arrangements of which the present invention has relevance.

Fig. 6 is a block schematic diagram of a vehicle navigation system 10 for use with the present invention. Sensors 12 and 14 and a GPS receiver 18 are coupled to computing means 20 through a sensor/GPS interface 22. In typical embodiments, the mileage sensor 12 includes an odometer, and the angular velocity sensor 14 includes a gyroscope, or a differential odometer coupled to the wheels of a vehicle. A global positioning system (GPS) data receiver 18 is provided for receiving signals from, for example, a satellite-based navigation system. Data from the sensor/GPS interface 22 is transmitted to a CPU 24, which performs calibration, signal processing, dead-reckoning, vehicle positioning, and route guidance functions. A database containing map information may be stored in a database medium 26, with software directing the operation of the computing means 20 stored in a main memory 28 for execution by the CPU 24. The memory 28 may include a read-only memory (ROM), or a reprogrammable non-volatile memory, such as a flash memory or an SRAM. A system RAM 30 permits the reading and writing of the information necessary to execute such software programs. The database medium 26 may include a non-volatile memory, a hard disk drive, a CD-ROM, or an integrated circuit in which digitized map information has been stored. An output controller 32, which may include a graphics controller, receives data processed by the CPU 24 and transmits the data to a display console 40 which includes an output communicator 34, usually a display screen with associated audio electronics and audio speakers. The driver may input data, such as a desired destination, through a user interface 36, typically a keyboard.

The map database stored in the database medium 26 preferably includes positional data such as, for example, latitude and longitude coordinates, to describe road intersections or nodes, road segments, landmarks and points of interest, and other geographical information. The data base may further include data representing characteristics of roads or places on the map, such as road and place names, road features such as dividers, one-way restrictions, surface, speed limit, shape, elevation, and other properties. In particular embodiments illustrative of the invention, the map database includes cost values associated with individual nodes and road segments. These cost values correspond to the estimates of time intervals for traversing the respective node or segment. Node cost values take into consideration such information as, for example, whether the vehicle would encounter oncoming traffic, thus delaying a left turn manoeuvre. Segment costs reflect road segment characteristics such as speed limit and segment length, both of which affect the travel time along the segment. Also associated with each road in the map database is a link class which relates to the category or type of the road. For example, the highest level category of the hierarchy is the link class FREEWAY. The lowest level includes the link classes FRONTAGE and MISC which include, for example, frontage roads and alleys.

A vehicle navigation system to be described in illustration of the present invention by way of example is operable to generate a route from a source location to a destination according to a variety of different methods. Some examples of such methods are described in the U.S. patents mentioned above. Further methods for route generation may be employed in conjunction with the present invention.

Fig. 7A shows a flowchart 700 for use in describing the operation of a specific embodiment illustrative of the present invention by way of example. As discussed above, the system searches its map database for road segments to include in the generated route according to any of a variety of search algorithms (step 702) until the destination is reached (step 704). When a new manoeuvre has been included in the route (step 706) a threshold distance is determined (step 708). As long as no new manoeuvres are encountered, the algorithm continues to search for road segments. The threshold distance is the distance within which a second manoeuvre would be considered potentially difficult or dangerous. The threshold distance may be determined as appropriate for each particular embodiment. For example, the threshold distance may be a fixed distance, e.g., 200 feet (60 m). Alternatively, the threshold distance may vary with the type of road segment which connects two manoeuvres. That is, the threshold distance for a freeway would be greater than that for a major surface street in a residential area.

Once a threshold distance has been determined, a second manoeuvre is identified which could potentially be included in the generated route (step 710). If the second manoeuvre is within the threshold distance (step 712), the cost associated with that manoeuvre is increased to decrease the likelihood that the manoeuvre will be included in the generated route (step 714). The search algorithm then continues to generate the route based at least in part on this increased cost. If the second manoeuvre is not within the threshold distance, the algorithm continues to search for additional road segments in the usual manner.

Fig. 7B shows a flowchart 701 for use in describing an alternative embodiment illustrative of the present invention. Steps 702 through 708 are substantially the same as discussed above with reference to Fig. 7A. However, once the threshold distance has been determined, the algorithm determines whether there are any potential manoeuvres within the threshold distance (step 711). If there are none, the algorithm continues to search for additional road segments. If, however, potential manoeuvres are identified within the threshold distance, the cost associated with each of the manoeuvres is increased to decrease the likelihood that the manoeuvre will be included in the generated route (step 713). The search algorithm then continues to generate the route based at least in part on these increased costs.

The manner in which the costs associated with manoeuvres are increased may vary according to each different embodiment. For example, a fixed increment may be applied to the cost. Alternatively, the increment applied to the cost may vary according to the distance between the first and second manoeuvres. Additionally, the magnitude of the increment may be dependent upon the type of road segment connecting the two manoeuvres and/or the speed limit on that segment. It will be understood that the scope of the protection sought includes, but is not limited to, the embodiments that have been described, by way of example.

It will be understood that, although particular embodiments have been described by way of example in illustration of the invention, variations and modifications thereof, as well as other embodiments may be made within the scope of the appended claims. For example, embodiments illustrative of the present invention by way of example have been described with reference to the manipulation of the cost associated with a second manoeuvre to effect the goal of avoiding the inclusion of difficult or dangerous successive manoeuvres in a generated route. However, it will be understood that the scope of the protection sought will encompass a system in which the search algorithm is prohibited from including a second manoeuvre within a threshold distance of a first manoeuvre in a generated route. This may be accomplished by dramatically increasing the cost of the second manoeuvre. It could also be achieved through some other mechanism which causes the search algorithm to ignore the manoeuvre and its associated road segments. Such a mechanism might, for example, remove such manoeuvres from the map database for the current search. Alternatively, the system might develop a list of such manoeuvres which are prohibited from inclusion in the route, checking each new segment candidate against the list and eliminating any matches from consideration. These are only some of the many possibilities which would fall within the scope of the protection sought.

## Claims

1. A method of generating a route from a source location to a destination in a vehicle navigation system, the method including the steps of generating a first partial route from the source location to an end of the first partial route, the first partial route including a first manoeuvre, determining whether a second manoeuvre is within a first distance from the first manoeuvre, manipulating a parameter associated with the second manoeuvre when the second manoeuvre is within the first distance, and generating a second partial route from the end of the first partial route to the destination based at least in part on the parameter associated with the second manoeuvre.

2. The method as claimed in claim 1 wherein the first and second manoeuvres are connected by a road segment, the first distance being determined with regard to a characteristic of the road segment.

3. The method as claimed in claim 2 wherein the characteristic includes a number of lanes in the road segment.

4. The method as claimed in claim 2 wherein the characteristic includes a width of the road segment.

5. The method as claimed in claim 2 wherein the characteristic includes a link class of the road segment.

6. The method as claimed in claim 1 wherein the step of manipulating the parameter includes increasing a cost associated with the second manoeuvre.

7. The method as claimed in claim 6 wherein the cost is increased by a variable amount, the variable amount varying with a second distance between the first and second manoeuvres.

8. The method as claimed in claim 1 wherein the step of manipulating the parameter includes prohibiting access to the second manoeuvre.

9. The method as claimed in claim 1 wherein the step of manipulating the parameter includes ignoring the second manoeuvre for the generation of the second partial route.

10. The method as claimed in claim 1 wherein the first manoeuvre includes exiting a highway and the second manoeuvre includes making an abrupt turn.

11. The method as claimed in claim 1 wherein the first manoeuvre includes making a first turn in a first direction and the second manoeuvre includes making a second turn in a second direction, the first and second directions being substantially opposed.

12. The method as claimed in claim 1 wherein the first direction is left and the second direction is right.

13. The method as claimed in claim 1 wherein the first direction is right and the second direction is left.

14. Apparatus for generating a route from a source location to a destination in a vehicle navigation system, including means for generating a first partial route from the source location to an end of the first partial route, the first partial route including a first manoeuvre, means for determining whether a second manoeuvre is within a first distance from the first manoeuvre, means for manipulating a parameter associated with the second manoeuvre where the second manoeuvre is within the first distance, and means for generating a second partial route from the end of the first partial route to the destination, the generation of the second partial route being based at least in part on the parameter associated with the second manoeuvre.

15. A vehicle navigation system, including a plurality of sensors for detecting a current vehicle position and a vehicle heading, and generating signals indicative thereof, a database medium having geographic locations of a plurality of road segments and segment nodes stored therein, a processor coupled to the sensors and the database medium for generating a route from a source location to a destination, the processor being operable to
(a) generate a first partial route from the source location to an end of the first partial route, the first partial route including a first manoeuvre,
(b) determine whether a second manoeuvre is within a first distance from the first manoeuvre,
(c) where the second manoeuvre is within the first distance, manipulate a parameter associated with the second manoeuvre, and
(d) generate a second partial route from the end of the first partial route to the destination based at least in part on the parameter associated with the second manoeuvre,
and an output communicator coupled to the processor for communicating the route to a user of the vehicle navigation system.

16. A computer program product for determining a route from a source location to a destination, including a computer-readable medium, and a computer program mechanism embedded in the computer-readable medium for causing a computer to perform the steps of generating a first partial route from the source location to an end of the first partial route, the first partial route including a first manoeuvre, determining whether a second manoeuvre is within a first distance from the first manoeuvre, where the second manoeuvre is within the first distance, manipulating a parameter associated with the second manoeuvre, and generating a second partial route from the end of the first partial route to the destination based at least in part on the parameter associated with the second manoeuvre.

## Patentansprüche

1. Verfahren zum Erzeugen einer Route von einem Ausgangsort zu einem Ziel in einem Fahrzeugnavigationssystem, wobei das Verfahren die folgenden Schritte umfasst: Erzeugen einer ersten Teilroute vom Ausgangsort zu einem Ende der ersten Teilroute, wobei die erste Teilroute ein erstes Manöver beinhaltet, Ermitteln, ob ein zweites Manöver innerhalb einer ersten Distanz von dem ersten Manöver liegt, Manipulieren eines Parameters, der mit dem zweiten Manöver assoziiert ist, wenn das zweite Manöver innerhalb der ersten Distanz liegt, und Erzeugen einer zweiten Teilroute vom Ende der ersten Teilroute zum Ziel, die wenigstens zum Teil auf dem Parameter basiert, der mit dem zweiten Manöver assoziiert ist.

2. Verfahren nach Anspruch 1, bei dem das erste und das zweite Manöver durch ein Straßensegment verbunden sind, wobei die erste Distanz mit Bezug auf eine Charakteristik des Straßensegments bestimmt wird.

3. Verfahren nach Anspruch 2, bei dem die Charakteristik eine Reihe von Spuren in dem Straßensegment beinhaltet.

4. Verfahren nach Anspruch 2, bei dem die Charakteristik eine Breite des Straßensegments beinhaltet.

5. Verfahren nach Anspruch 2, bei dem die Charakteristik eine Verbindungsklasse des Straßensegments beinhaltet.

6. Verfahren nach Anspruch 1, bei dem der Schritt des Manipulierens des Parameters die Erhöhung eines Kostenfaktors in Verbindung mit dem zweiten Manöver beinhaltet.

7. Verfahren nach Anspruch 6, bei dem die Kosten um einen veränderlichen Betrag erhöht werden, wobei der veränderliche Betrag mit einer zweiten Distanz zwischen dem ersten und dem zweiten Manöver variiert.

8. Verfahren nach Anspruch 1, bei dem der Schritt des Manipulierens des Parameters das Untersagen des Zugangs zu dem zweiten Manöver beinhaltet.

9. Verfahren nach Anspruch 1, bei dem der Schritt des Manipulierens des Parameters das Ignorieren des zweiten Manövers zum Erzeugen der zweiten Teilroute beinhaltet.

10. Verfahren nach Anspruch 1, bei dem das erste Manöver das Verlassen einer Autobahn und das zweite Manöver das Durchführen einer abrupten Abbiegung beinhaltet.

11. Verfahren nach Anspruch 1, bei dem das erste Manöver ein erstes Abbiegen in einer ersten Richtung und das zweite Manöver ein zweites Abbiegen in einer zweiten Richtung beinhaltet, wobei die erste und die zweite Richtung einander im Wesentlichen entgegengesetzt sind.

12. Verfahren nach Anspruch 1, bei dem die erste Richtung links und die zweite Richtung rechts ist.

13. Verfahren nach Anspruch 1, bei dem die erste Richtung rechts und die zweite Richtung links ist.

14. Vorrichtung zum Erzeugen einer Route von einem Ausgangsort zu einem Ziel in einem Fahrzeugnavigationssystem, wobei die Vorrichtung Folgendes umfasst: Mittel zum Erzeugen einer ersten Teilroute vom Ausgangsort zu einem Ende der ersten Teilroute, wobei die erste Teilroute ein erstes Manöver beinhaltet, Mittel zum Ermitteln, ob ein zweites Manöver innerhalb einer ersten Distanz von dem ersten Manöver liegt, Mittel zum Manipulieren eines Parameters, der mit dem zweiten Manöver assoziiert ist, wenn das zweite Manöver innerhalb der ersten Distanz liegt, und Mittel zum Erzeugen einer zweiten Teilroute vom Ende der ersten Teilroute zum Ziel, wobei die Erzeugung der zweiten Teilroute wenigstens zum Teil auf dem Parameter basiert, der mit dem zweiten Manöver assoziiert ist.

15. Fahrzeugnavigationssystem mit einer Mehrzahl von Sensoren zum Erkennen einer aktuellen Fahrzeugposition und einer Fahrzeugbewegungsrichtung und zum Erzeugen von dies anzeigenden Signalen, einem Datenbankmedium mit darin gespeicherten geografischen Orten aus einer Mehrzahl von Straßensegmenten und Segmentknotenpunkten, einem mit den Sensoren und dem Datenbankmedium gekoppelten Prozessor zum Erzeugen einer Route von einem Ausgangsort zu einem Ziel, wobei der Prozessor die folgenden Aufgaben hat:
a) Erzeugen einer ersten Teilroute vom Ausgangsort zu einem Ende der ersten Teilroute, wobei die erste Teilroute ein erstes Manöver beinhaltet,
b) Ermitteln, ob ein zweites Manöver innerhalb einer ersten Distanz von dem ersten Manöver ist,
c) wenn das zweite Manöver innerhalb der ersten Distanz liegt, Manipulieren eines mit dem zweiten Manöver assoziierten Parameters, und
d) Erzeugen einer zweiten Teilroute vom Ende der ersten Teilroute zum Ziel, die wenigstens teilweise auf dem Parameter basiert, der mit dem zweiten Manöver assoziiert ist,
und einem Ausgangskommunikator, der mit dem Prozessor gekoppelt ist, um einem Benutzer des Fahrzeugnavigationssystems die Route zu übermitteln.

16. Computerprogrammprodukt zum Ermitteln einer Route von einem Ausgangsort zu einem Ziel, umfassend ein rechnerlesbares Medium und einen Computerprogrammmechanismus, der in dem rechnerlesbaren Medium eingebettet ist, um den Computer zu veranlassen, die folgenden Schritte auszuführen: Erzeugen einer ersten Teilroute vom Ausgangsort zu einem Ende der ersten Teilroute, wobei die erste Teilroute ein erstes Manöver beinhaltet, Ermitteln, ob ein zweites Manöver innerhalb einer ersten Distanz von dem ersten Manöver liegt, wenn das zweite Manöver innerhalb der ersten Distanz liegt, Manipulieren eines Parameters, der mit dem zweiten Manöver assoziiert ist, und Erzeugen einer zweiten Teilroute vom Ende der ersten Teilroute zum Ziel, die wenigstens zum Teil auf dem Parameter basiert, der mit dem zweiten Manöver assoziiert ist.

## Revendications

1. Procédé de génération d'un itinéraire depuis une position de départ jusqu'à une destination dans un système de navigation de véhicule, le procédé comportant les étapes de génération d'un premier itinéraire partiel depuis la position de départ jusqu'à une fin du premier itinéraire partiel, le premier itinéraire partiel comportant une première manoeuvre, détermination si une deuxième manoeuvre se situe en deçà d'une première distance de la première manoeuvre, manipulation d'un paramètre associé à la deuxième manoeuvre quand la deuxième manoeuvre se situe en deçà de la première distance, et génération d'un deuxième itinéraire partiel à partir de la fin du premier itinéraire partiel jusqu'à la destination en fonction au moins en partie du paramètre associé à la deuxième manoeuvre.

2. Procédé selon la revendication 1, dans lequel les première et deuxième manoeuvres sont reliées par un segment de route, la première distance étant déterminée par rapport à une caractéristique du segment de route.

3. Procédé selon la revendication 2, dans lequel la caractéristique comporte un certain nombre de voies dans le segment de route.

4. Procédé selon la revendication 2, dans lequel la caractéristique comporte une largeur du segment de route.

5. Procédé selon la revendication 2, dans lequel la caractéristique comporte une classe de liaison du segment de route.

6. Procédé selon la revendication 1, dans lequel l'étape de manipulation du paramètre comporte l'augmentation d'un coût associé à la deuxième manoeuvre.

7. Procédé selon la revendication 6, dans lequel le coût est augmenté par une quantité variable, la quantité variable variant avec une deuxième distance entre les première et deuxième manoeuvres.

8. Procédé selon la revendication 1, dans lequel l'étape de manipulation du paramètre comporte l'interdiction de l'accès à la deuxième manoeuvre.

9. Procédé selon la revendication 1, dans lequel l'étape de manipulation du paramètre comporte la non-considération de la deuxième manoeuvre pour la génération du deuxième itinéraire partiel.

10. Procédé selon la revendication 1, dans lequel la première manoeuvre comporte la sortie d'une autoroute et la deuxième manoeuvre comporte l'exécution d'un virage brusque.

11. Procédé selon la revendication 1, dans lequel la première manoeuvre comporte l'exécution d'un premier virage dans un premier sens et la deuxième manoeuvre comporte l'exécution d'un deuxième virage dans un deuxième sens, les premier et deuxième sens étant sensiblement opposés.

12. Procédé selon la revendication 1, dans lequel le premier sens est la gauche et le deuxième sens est la droite.

13. Procédé selon la revendication 1, dans lequel le premier sens est la droite et le deuxième sens est la gauche.

14. Dispositif de génération d'un itinéraire depuis une position de départ jusqu'à une destination dans un système de navigation de véhicule, comportant un moyen pour générer un premier itinéraire partiel depuis la position de départ jusqu'à une fin du premier itinéraire partiel, le premier itinéraire partiel comportant une première manoeuvre, un moyen pour déterminer si une deuxième manoeuvre se situe en deçà d'une première distance de la première manoeuvre, un moyen pour manipuler un paramètre associé à la deuxième manoeuvre quand la deuxième manoeuvre se situe en deçà de la première distance, et un moyen pour générer un deuxième itinéraire partiel à partir de la fin du premier itinéraire partiel jusqu'à la destination, la génération du deuxième itinéraire partiel étant basée au moins en partie sur le paramètre associé à la deuxième manoeuvre.

15. Système de navigation de véhicule, comportant une pluralité de capteurs pour détecter la position actuelle d'un véhicule et le cap d'un véhicule, et la génération de signaux indicatifs de ceux-ci, un support de base de données dans lequel sont mémorisées des positions géographiques d'une pluralité de segments de route et de noeuds de segments, un processeur couplé aux capteurs et au support de base de données pour générer un itinéraire depuis une position de départ jusqu'à une destination, le processeur étant exploitable pour
a) générer un premier itinéraire partiel depuis la position de départ jusqu'à une fin du premier itinéraire partiel, le premier itinéraire partiel comportant une première manoeuvre,
(b) déterminer si une deuxième manoeuvre se situe en deçà d'une première distance de la première manoeuvre,
(c) quand la deuxième manoeuvre se situe en deçà de la première distance, manipuler un paramètre associé à la deuxième manoeuvre, et
(d) générer un deuxième itinéraire partiel à partir de la fin du premier itinéraire partiel jusqu'à la destination, la génération du deuxième itinéraire partiel étant basée au moins en partie sur le paramètre associé à la deuxième manoeuvre.
et un communicateur de sortie couplé au processeur pour communiquer l'itinéraire à un utilisateur du système de navigation de véhicule.

16. Produit de programme informatique pour déterminer un itinéraire depuis une position de départ jusqu'à une destination, comportant un support lisible par ordinateur, et un mécanisme de programme informatique noyé dans le support lisible par ordinateur pour faire en sorte qu'un ordinateur exécute les étapes de génération d'un premier itinéraire partiel depuis la position de départ jusqu'à une fin du premier itinéraire partiel, le premier itinéraire partiel comportant une première manoeuvre, détermination si une deuxième manoeuvre se situe en deçà d'une première distance de la première manoeuvre, manipulation d'un paramètre associé à la deuxième manoeuvre quand la deuxième manoeuvre se situe en deçà de la première distance, et génération d'un deuxième itinéraire partiel à partir de la fin du premier itinéraire partiel jusqu'à la destination en fonction au moins en partie du paramètre associé à la deuxième manoeuvre.
